# EUROPEAN PATENT SPECIFICATION

(11) **EP 2 267 853 B1**
(45) Date of publication and mention of the grant of the patent: **05.09.2012**
(21) Application number: 09163743.9
(22) Date of filing: 25.06.2009
(51) Int. Cl.: B65H 75/44, H02G 1/10, H02G 9/02

(54) **System for deployment of a seabed cable distribution network**
System zur Anwendung eines Meeresbodenkabel-Verteilungsnetzwerks
Système pour le déploiement d'un réseau de distribution de câble articulé

(43) Date of publication of application: 29.12.2010
(73) Proprietor: Optoplan AS, 7075 Tiller (NO)
(72) Inventor: Berg, Arne, N-7082, Kattem (NO)
(74) Representative: Plougmann & Vingtoft A/S

(56) References cited:
- GB-A- 2 339 085
- JP-A- 63 073 812
- JP-A- 2002 165 348
- US-A- 3 952 962
- US-A- 5 421 501

## Description

### FIELD OF THE INVENTION

The invention relates to a system and a method for deployment and retrieval of a cable distribution network comprising cables branched off a main cable.

### BACKGROUND OF THE INVENTION

There is a need for installing different kinds of cable distribution networks on the seabed. As examples, such networks include telecommunication networks and networks for seismic investigations.

A cable distribution network may comprise a main cable with secondary cables branching off from the main cable. Installation of such a branched network is complicated and existing cable deployment systems are not suited for installing branched networks.

It is a problem that known systems and methods are not able to handle branched cable network as efficiently and reliably as required. Accordingly, there is a need for improved systems for handling branched cable networks.

US2002/0172562 disclose an underwater cable deployment system including a series of cables, pre-wound on a set of reels, disposed upon a pallet and connected to a distribution hub on the pallet. The pallet is lowered to the ocean floor and a remotely operated vehicle is also lowered to the ocean floor to deploy cables to form a predetermined array on the ocean floor. Preferably, the pallet is delivered to the ocean floor in advance by crane with the reel-mounted sensor array cables being deployed later by the remotely operated vehicle.

Whereas US2002/0172562 discloses installation of a cable array on the ocean floor by an underwater system, there is still a need for installing cable networks from a system located above the water surface. In particular there is a need for a simpler deployment system since operation of an underwater deployment system may be complex to operate.

JP 63073812 (A) discloses a technique and sysem for installation of a branched submarine cable. A seabed cable distribution network is deployed/retrieved in cable sections. A secondary cable is shown to branch off a primary cable, while the system discloses the use of primary and a secondary reels.

JP 2002165348 (A) discloses a method and apparatus for rolling-up the transmission line cable used to connect to remote sensing equipment in which a transmission line cable is wound on a cable drum. Auxiliary drums are used to assist in the winding of the cable to and from the cable drum.

### SUMMARY OF THE INVENTION

Accordingly, an object of the invention is to alleviate the above mentioned disadvantages with deployment systems operated from the ocean floor by providing a deployment system capable of being operated from the deck of a vessel.

This object and several other objects are obtained in a first aspect of the invention by providing an apparatus for deploying or retrieving cable sections of a seabed cable distribution network comprising a primary cable section and a secondary cable section branched off the primary cable, the apparatus comprises,
- a primary reel for accommodating at least a fraction of the primary cable section,
- a secondary reel arranged adjacent to the primary reel for accommodating at least a fraction of the secondary cable section,
- a reel body arranged for holding the primary and secondary reels and for rotating the primary reel,
- a reel driving means for driving the secondary reel independently of the primary reel.

It may be seen as an advantage that the cable apparatus is provided with a reel driving means for independent driving of the secondary reel relative to the primary reel which is driven by the reel body. For example, when diameters of the coils of the primary and secondary cables are different, the independent rotation speeds of the reels may be advantageous for obtaining the same deployment or retrieval speeds of the primary cable and the branched secondary cable. As another example, independent rotation speed of the reels may be advantageous for obtaining different deployment or retrieval speeds of the primary and secondary cables, for example to reduce slack of one of the cables or for handling of only one of the cables while the other cable is stationary.

In an embodiment, the primary reel may be fixed to the reel body and the secondary reel is rotatably connected to the reel body. The secondary reel may advantageously be rotatably connected to the reel body to obtain independent driving of the primary and secondary reels.

In an embodiment the reel driving means may be configured for driving the secondary reel simultaneously, but independently, with rotation of the primary reel. Simultaneous driving of primary and secondary reels with independent speeds may be advantageous for reliable handling of cable network with both a main cable and cables branched off the main cable.

In an embodiment, the reel driving means may be moveably arranged for operatively connecting to different secondary reels. The reel driving means may advantageously be moveably arranged so that the reel driving means can be used for driving different secondary reels in turn.

In an embodiment the reel driving means may be a flange drive operatively connectable to a flange of the secondary reel. It may be advantageous to use a flange drive since it can be shifted between different secondary reels.

In an embodiment the apparatus according to the first aspect may comprise a cable guide with a curved guiding section configured to be coupled to a flange circumference of the primary reel for guiding the cable across the flange circumference. A cable guide with a curved guiding may advantageously be used to guide for example the primary cable from one primary reel to a subsequent primary or secondary reel.

In an embodiment the apparatus may comprise a detachable branch unit clamp for holding a branch unit which connects the primary cable section with the secondary cable section, and for clamping rotation of the primary reel relative to the adjacent secondary reel, where the branch unit clamp is detachably connectable to flanges of the primary reel and the secondary reel. It may be seen as an advantage to use a branch unit clamp which both provides as a means for holding the branch unit and a means for clamping relative rotation between reels and, therefore, serves dual purposes. It may be particularly advantageous that the branch unit clamp is detachably connectable to flanges of the reels since this provides a flexibility of enabling the clamp to mounted anywhere on the circumference of the reels.

A second aspect of the invention relates to a system for deploying or retrieving cable sections of a seabed cable distribution network comprising a primary cable section and a secondary cable section branched off the primary cable, where the system comprises:
- an apparatus according to the first aspect, and
- a reel body driving means operatively connectable to the reel body.
   Accordingly, a system for deploying or retrieving a cable network may include a reel body driving means, for example a hub drive. The hub drive may be an existing part of a vessel or provided with the apparatus according to the first aspect.
   An embodiment of the system according to the second aspect may further comprise first and second chutes for guiding the respective primary cable and the secondary cable towards/from the seabed. The chutes may limit problems with twisting of the primary and secondary cable due to the separation of the chutes.
   An embodiment of the second aspect may further comprise first and second cable clamps for clamping the respective primary cable and the secondary cable, where the cable clamps are located downstream relative to the primary reel and the secondary reel.
   A third aspect of the invention relates to a method for deploying or retrieving cable sections of a seabed cable distribution network comprising a primary cable section and a secondary cable section branched off the primary cable section, the method comprises,
- rotating a reel body for driving a primary reel mounted on the reel body, where the primary reel is arranged for accommodating at least a fraction of the primary cable section,
- operating a reel driving means operatively connected to a secondary reel, where the secondary reel is rotatably connected on the reel body for enabling independent driving of the secondary reel relative to the primary reel, and where the secondary reel is arranged for accommodating at least a fraction of the secondary cable section.

In an embodiment according to the method of the third aspect a reel body driving means, for example a hub drive or an under roller, is used for rotating the reel body.

An embodiment according to the method of the third aspect comprises temporarily deploying or retrieving the primary cable section via the primary reel simultaneous with deploying or retrieving the secondary cable section via the secondary reel.

In an embodiment according to the method of the third aspect, where prior to deploying the primary cable section and the secondary cable section a detachable branch unit clamp is released from the primary reel and the secondary reel for allowing relative rotation of the primary reel and the adjacent secondary reel.

An embodiment according to the method of the third aspect further comprises releasing the branch unit from the detachable branch unit clamp, where the branch unit connects the primary cable section with the secondary cable section.

In an embodiment according to the method of the third aspect, the primary cable section is guided from a first primary reel across a secondary reel to a second primary reel for unreeling the second primary reel and the secondary reel. When the branch unit clamp is mounted to the primary cable reels, the primary cable may advantageously be guided from one primary reel to the following primary reel by guiding the primary cable across the secondary reel, for example using cable crossings mounted to flanges of the primary reels.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The present invention will now be explained, by way of example only, with reference to the accompanying Figures, where
Fig. 1A shows cable distribution network,
Fig. 1B shows a branch unit of the cable network,
Fig. 2 shows a multi-reel system for deploying and retrieving the cable network,
Fig. 3A shows a branch unit clamp mounted to the flanges of primary and secondary reels,
Fig. 3B shows details of a branch unit clamp,
Fig. 4A shows a cable guide mounted to the flange of a reel,
Fig. 4B shows an example of crossing a cable over a reel using two cable crossings,
Fig. 4C shows an example of crossing a cable from one reel to an adjacent reel using a single cable crossing,
Fig. 5 shows driving of a reel body using an under roller, and
Figs. 6A-F and 7A-D illustrates steps in deployment of the cable network.

### DESCRIPTION OF AN EMBODIMENT

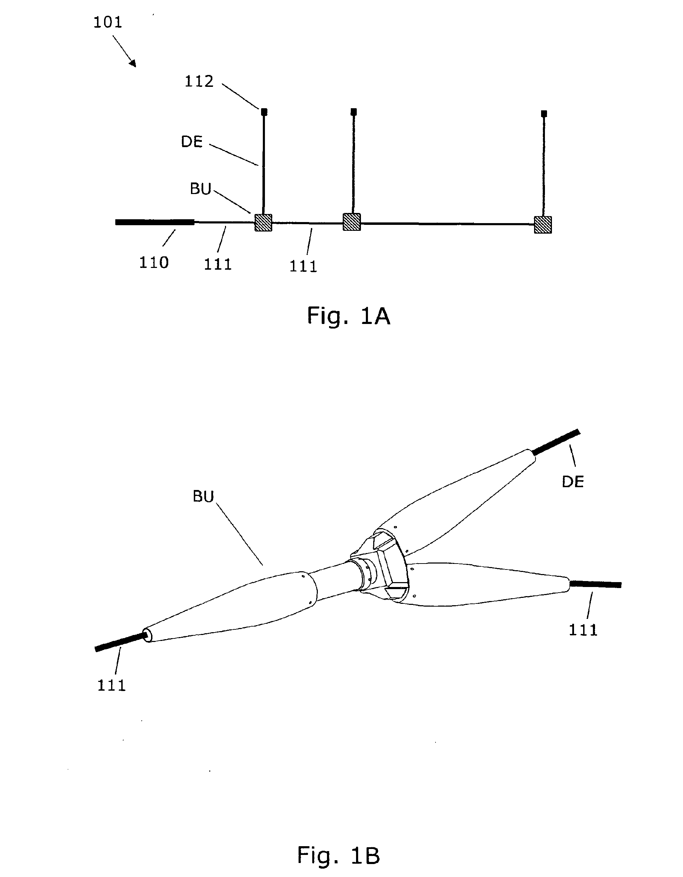

Fig. 1A shows a cable distribution network 101 or backbone cable net 101 comprising a primary cable 111 or primary cable sections 111, branch units BU, secondary dead-end cables DE and terminations 112. A riser cable 110 may be used for connecting the backbone cable net 101 to a platform, e.g. an offshore platform for oil extraction.

The branch units BU connect the primary cable sections 111 and the secondary dead end cables DE and serves to branch off the primary cable. The secondary dead end cables may be provided with a termination 112 for connecting the secondary cable DE with sensor cables (not shown).

The riser cable 110 may be the same cable as the primary cable 111 or the riser cable may be a separate cable connectable to the primary cable, for example via connectors or via cable splicing.

The primary cable and cable sections 111 are equivalently referred to as a BU cable, BU cable sections or branch-unit cables or sections. The secondary dead-end cable and dead-end cable sections DE are equivalently referred to as DE cable and DE cable sections. A section of a BU cable may be the section, or a fraction thereof, connecting e.g. two branch units. Similarly a section of a DE cable may be the entire DE cable, or a fraction thereof, connecting a branch unit BU with a termination 112.

Fig. 1B shows an example of a branch unit BU which connects primary cable sections 111 with a secondary cable section DE.

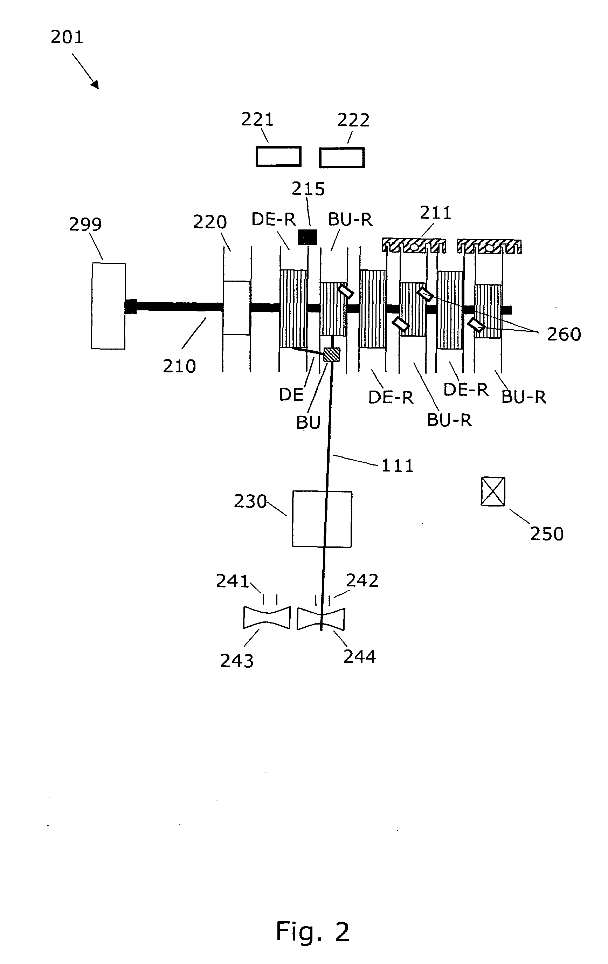

Fig. 2 shows a multi-reel system 201 for deploying and retrieving a backbone cable net 101. The multi-reel system 201 comprises a reel body 210 for mounting of reels (220, DE-R, BU-R). The reel body 210 may be an axel onto which the reels can be fixed or rotatably mounted. The reel body 210 may be rotatably driven by a reel body driving means 299, such as a electric motor coupled to the axel of the reel body 210. The reels on the reel body comprise branch unit reels BU-R and dead end reels DE-R.

The branch unit reels BU-R are arranged for containing the primary cable 111 and the dead-end reels DE-R are arranged for containing the dead-end cables. Each branch unit reel BU-R is arranged for accommodating at least a fraction of the primary cable section. That is, when a primary cable section is too long to be accommodated by a single branch unit reel, one or more adjacent branch unit reels may be used for accommodating the remaining cable section. The same applies for the dead-end reels, so that when a single dead-end reel is insufficient to accommodate the entire dead-end cable branch section, then one or more adjacent dead-end reels may be used for accommodating the remaining dead-end cable section. An additional riser cable reel 220 on the reel body 210 may be used for holding the riser cable 111.

In the following the branch unit reels BU-R are equivalently referred to as primary reels and BU reels, and the dead-end reels DE-R are equivalently referred to as secondary reels and DE reels.

The branch units BU may be fixed either to the primary reels BU-R or the secondary reels DE-R via branch unit clamps 211. The branch unit clamp 211 may be fixed both to the primary reel BU-R and one or two neighbouring secondary reels DE-R so that relative rotation between the clamped reels is prohibited. Preferably, the branch unit clamp may be fixed both to the secondary reel DE-R and one or two neighbouring primary reels BU-R in order to limit the number of flanges that the cables has to cross.

Thus, the branch unit clamp 211 serves both as a detachable branch unit clamp for holding a branch unit BU and as a detachable reel clamp for clamping rotation of the primary reel relative to the at least the adjacent secondary reel.

The branch unit clamp 211 may be configured to be detachably connectable to flanges of the primary reel so that the branch unit clamp can be attached anywhere on the circumference of the primary reel.

The branch unit clamp 211 may be configured to be detachably connectable to adjacent flanges of the primary reel and the secondary reel for clamping relative rotation. This also allows the branch unit clamp 211 to be attached anywhere on the circumference of the secondary reel.

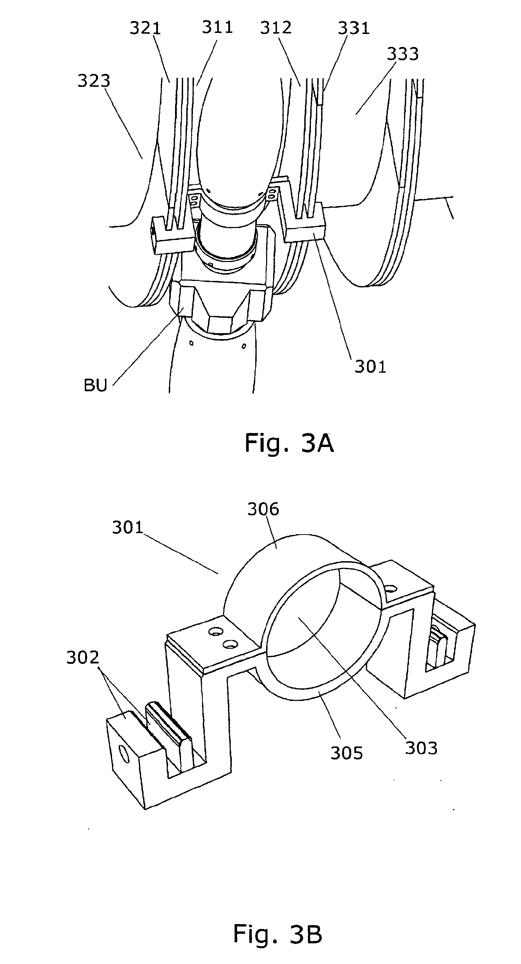

Fig. 3A shows an example of a branch unit clamp 301 mounted to the flanges 311,312 of a primary reel and adjacent flanges 321, 331 of adjacent secondary reels 323, 333. The clamp 301 comprises a mounting hole provided for holding the branch unit BU.

Fig. 3B shows the branch unit clamp 301 in detail with claws 302 for gripping to flanges of the reels. The claws 302 may be clamped to the flanges by use of bolts (not shown) or equivalent fastening means. The clamp 301 is formed by a lower part 305 and an upper part 306 detachable from the lower part 305 by means of screws (not shown) or equivalent fastening means. The mounting hole 303 for the branch unit BU (not shown) may be formed by the upper and lower parts 305,306 as shown. By detachment of the upper part 306, the branch unit BU can be released from the branch unit clamp 301.

The secondary reels DE-R are preferably rotatably connected on the reel body 210, for example using bearings connecting the outer circumference of the reel body 210 to the inner circumference of the secondary reel. The primary reels BUR and optionally the riser cable reel 220 are fixedly mounted on the reel body 210 so that they rotate with the reel body 210. A reel driving means 215, for example a flange drive 215, may be used for independently driving of DE reels by rotating a DE reel at a greater or lower rotation speed than the rotation speed of the reel body 210 and the primary reel.

The flange drive comprises a motorised wheel, for example a rubber wheel, which can be pressed against a flange of the secondary reel and, thereby, drive the secondary reel due to friction between the rubber wheel and the secondary reel.

Accordingly, the reel driving means 215 enables driving the secondary reel DE-R simultaneously with driving of the primary reel BU-R with a rotation speed different form the rotation speed of the primary reel BU-R. Simultaneous, but independent driving of the two reels may be achieved by mounting the secondary reel rotatably to the reel body 210, so that the primary and secondary reels can be driven at the same time at independent rotation speeds corresponding to the required retrieval or deployment speeds of the cables. The reel driving means 215 may be moveably arranged so that the reel driving means can be connected to different secondary reels on the reel body. For example, the reel driving means may be mounted on a guide extending parallel with the reel body 210 so that the reel driving means to be displaced along the guide and connected to individual secondary reels DE-R as required during retrieval or deployment. Alternatively, each secondary reel may have its own reel driving means.

The reel driving means may be arranged so that the secondary reels DE-R can also be operated by hand. It may be advantageous to be able to rotate the secondary reels by hand in order to make small rotational adjustments of the reel.

A linear cable engine 230 is used for controlling the tension of the primary cable between cable engine 230 and the BU reel. Thus, the function of the linear cable engine 230 is to take the weight of the cable between the vessel and the seabed, i.e. to control the gravity induced cable tension so that the cable tension between the linear cable engine and a BU reel is completely eliminated or reduced. The function of the linear cable engine may be accomplished by guiding the cable past the circumference of a motor-driven wheel which controls movement of the cable. By controlling the traction of the wheel on the cable via the motor the cable tension can be controlled.

Fig. 2 additionally shows dead-end winches 221 and branch unit winches 222 for controlling deployment of the terminations 112 and the branch units BU, respectively.

The multi-reel system 201 may further comprise a dead-end cable clamp 241 and a primary cable clamp 242 for clamping the cables. A dead-end chute 243 and a primary cable chute 244 may be provided for guiding the respective dead-end and primary cables over the gunwale of the vessel. The cable clamps 241, 242 may be located downstream relative to the primary and secondary reels and in front of the chutes 243, 244.

Fig. 2 schematically illustrates cable crossings or guides 260 which may be used for guiding the primary cable over the flanges of the reels from one BU reel over a DE reel to the next BU reel. The cable guide 260 has a curved guiding path with a radius sufficiently large to avoid damages of the cable. If the cables were guided directly across the flanges of the reels, there would be a risk of damaging the cables due to a sharp cable bending.

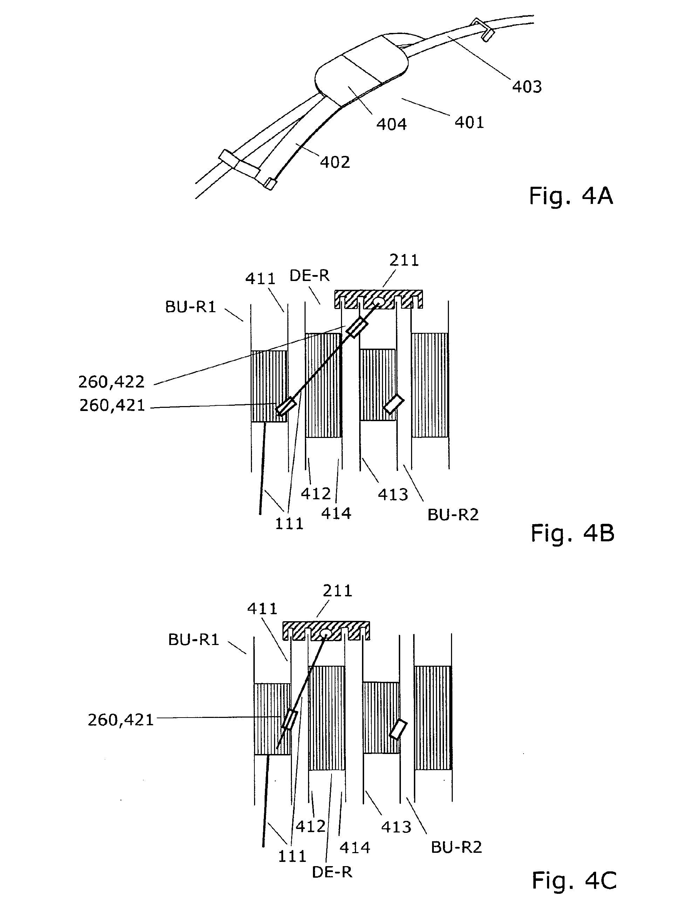

Fig. 4A shows an example of a cable guide 401 with a curved guiding section 402 configured to be coupled to the flange circumference 403 of the primary reel for guiding the cable across the flange circumference. The cable guide 401 may have cut-outs, clamping means or other fastening means enabling the cable guide 401 to be mounted anywhere on the flange or flange circumference. It is understood that the cable guide 401 may be mounted differently as long as the cable guide enables a cable to be guided across a flange along a curved guiding section.

In order to avoid damaging the cable when guided along the curved guiding section 402, the minimum bending-radius of the curved guiding path should correspond with the cable's specification of minimum bending radius. The central part 404 may have a bending radius similar to the radius of the outer circumference of a cable reel.

Fig. 4B shows an embodiment of the invention, where two cable guides 421,422 are mounted on the flanges of two primary reels BU-R1,BU-R2 placed adjacent to the respective flanges of a secondary reel DE-R, in order to guide the primary cable section 111 across the secondary reel DE-R. Thus, Fig. 4B shows first and second primary reels BU-R1, BU-R2 arranged on a reel body (not shown) with one primary reel one each side the of secondary reel DE-R, so that a first flange 411 of the first primary reel BU-R1 faces one flange 412 of the secondary reel DE-R and a second flange 413 of the second primary reel BU-R2 faces the other flange 414 the secondary reel DE-R, and further comprising first and second cable guides 421,422 with curved guiding sections 402 configured to be coupled to flange circumferences of said respective first and second flanges 411,413 of the primary reels for guiding the primary cable across the secondary reel to the second primary reel. More precisely, the primary cable is guided to the branch unit BU (not shown) fixed in the branch unit clamp 211 on the second primary reel BU-R2. Fig. 4C shows another corresponding embodiment of the invention where the branch unit clamp 211 is mounted on the secondary reel DE-R instead of the primary reel BU-R2. This embodiment may be advantageous since the primary cable section 111 does not have to cross over the secondary reel so only a single cable guide 421 is needed. In this embodiment, the primary cable is guided to the branch unit BU (not shown) fixed in the branch unit clamp 211 on the secondary reel DE-R.

The cable guides 260,421,422 enables reeling/un-reeling of the DE-cables and primary cable sections 111 onto/from a plurality of primary and secondary reel. In particular, the cable guides enables tight winding of the cables, since the curved cable guides limits extensive bending stresses of the cable which would otherwise arise due to sharp edges of the flanges.

Fig. 2 also shows a wagon 250 which may additionally be used for transportation of be BU units past the linear cable engine.

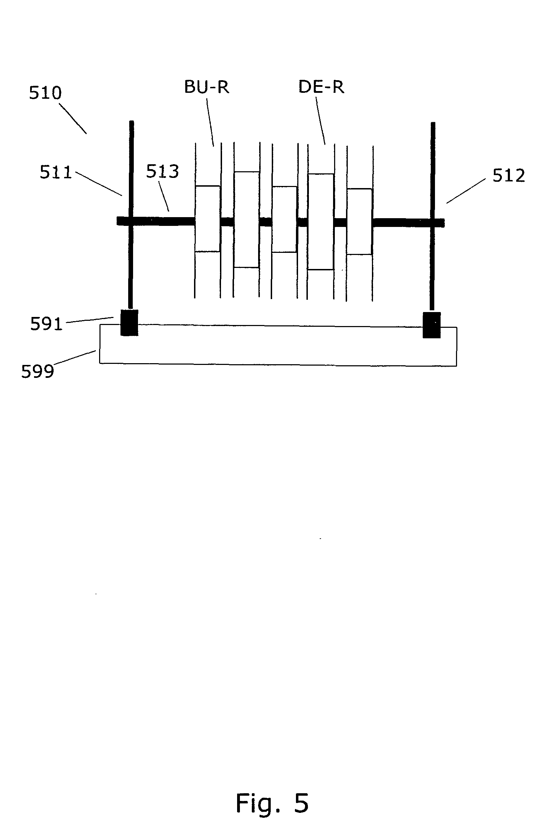

Fig. 5 shows an alternative reel body 510,210 having outer flanges 511,512. At least one of the flanges 511 is removable so that primary and secondary reels BUR and DE-R can be connected to the axel 513 of the reel body 510. When the reel body 510 has outer flanges 511, 512 with a diameter greater than the diameter of the primary and secondary reels, the reel body 510 can be driven by a reel body driving means 299,599 in the form of an under roller. The under roller 599 is capable of driving the flanges 511,512 and, thereby, the primary reel BU-R via drivable wheels 591. A reel body 510 having outer flanges 511,512 with a diameter greater than the diameter of the primary and secondary reels protects the branching units BU and the cables from impacts e.g. with the deck of the vessel. The large diameter out flanges 511, 512 may also improve handling of the reel body 510 on land, since the branching units and cables are protected.

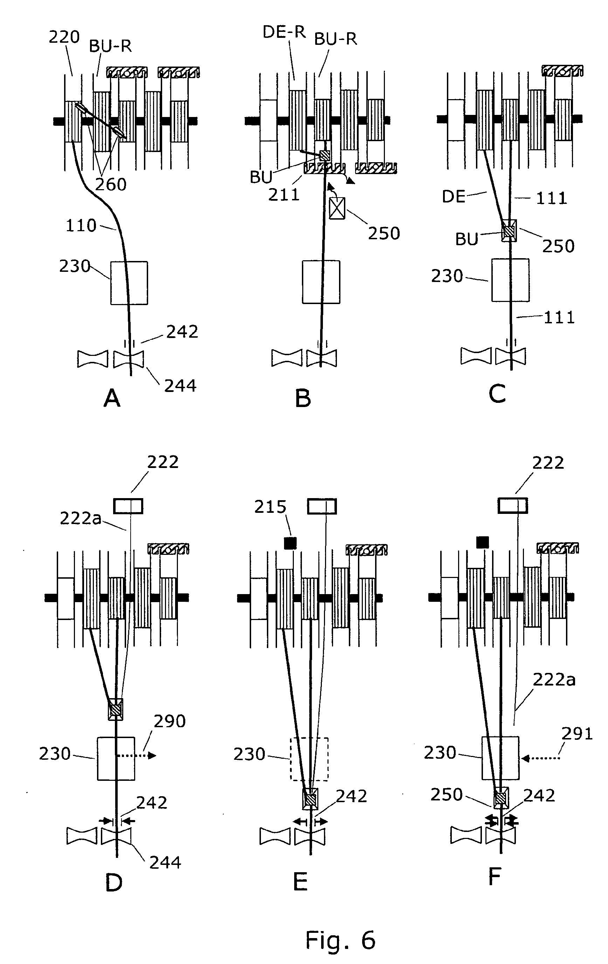

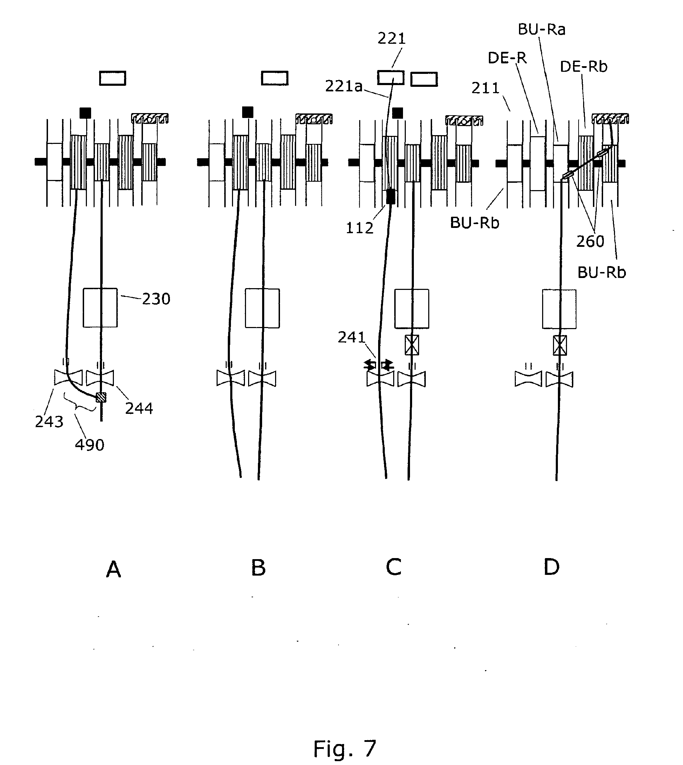

The function of the multi-reel system 201 will be elucidated from Figs. 6A-F and 7A-D which illustrate operation of the multi-reel system in connection with deployment of a backbone cable net 101.

Fig. 6A: The deployment of the backbone 101 may in an optional embodiment initially start with deployment of the riser cable which is reeled onto the riser cable reel 220. The riser cable passes through the linear cable engine 230, the primary cable clamp 242 and via the primary cable chute 244 to the seabed. The riser cable 110 may be connected with a section of primary cable 111 leading to the first branching unit BU as shown in Fig. 1. When the reel has been un-reeled, the riser cable crosses to the BU at the next primary reel BU-R, optionally via a cable crossing 260.

Alternatively, the riser cable 110 may be deployed independently from the remaining backbone 101, possibly from an independent reel operated separately from the multi-reel system 201. The riser cable 110 may be connected with the remaining backbone 101 by splicing or connecting the riser cable 110 to the primary cable 111 after deployment. Thus, in an embodiment deployment of the backbone 101 may initially start with deployment of the primary cable 111.

Fig. 6B: At the BU reel BU-R, the branch unit BU is clamped to the reel by the branch unit clamp 211. In order to un-reel the primary cable section 111 and the secondary cable section DE from the respective BU reel and DE reels, the BU clamp 211 is released from adjacent flanges of the primary reel and the secondary reel and the branch unit BU is also released from the clamp. Release of the BU clamp 211 enables relative rotation of the BU reel and the adjacent DE reel.

As an example, release of the branch unit BU may be performed by rotating the BU reel until the branch unit BU and the BU clamp 211 is close to the floor below the BU reel. Then a BU wagon may optionally be used for supporting the weight of the branch unit BU during transport of the branch unit. The BU wagon is placed under the branch unit and raised in order to carry the weight of the branch unit BU. Then the BU clamp 211 and the branch unit BU are released so that the wagon holds the branch unit. The wagon 250 may be lowered to establish clearance between the BU reel and the branch unit.

Fig. 6C: The branch unit BU is transported on the BU wagon towards the linear cable engine 230 under the control of the cable engine 230 which generates a suitable tension in the primary cable 111. As the branch unit is transported the primary cable 111 un-reels from the BU reel and the dead-end cable DE un-reels from the dead-end reel DE-R. Since the spool diameters of the DE reel and the BU reel may be different and since the diameters of the DE-cable winding and the diameter of the BU-cable winding on the reels may be different, the DE reel may be rotated at a different speed than the rotation speed of the reel body 210 and the primary reel BU-R so as to obtain similar deployment speeds of the DE cable and the BU cable. The independent rotation speed of the DE reel may be obtained by mounting the DE reel rotatably on the reel body 210 and controlling the rotation of the DE reel with the reel driving means 215 e.g. a flange drive 215. Independent driving of the DE reel may be obtained by other driving means.

Instead of using a wagon, the branch unit BU may simply be lowered to the deck of the vessel and slid over the deck under the control of the linear cable engine 230.

Fig. 6D: Since the branch unit BU cannot easily pass through the linear cable engine, the branch unit BU may alternatively be transported past the linear cable engine 230. This operation is achieved by initially locking the primary cable clamp 242 to take the pull from the cable below the sea surface. Then the primary cable 111 is removed from the linear cable engine 230, illustrated by the arrow 290. A wire 222a from the BU winch 222 is attached to the branch unit BU and tightened up to control the subsequent deployment of the branch unit.

Fig. 6E: Since the BU winch 222 takes the weight of the backbone cable 101 on deck and below the sea surface the primary cable clamp 242 is opened again. Deployment of the branch unit BU, the primary cable 111 and the dead-end cable is continued under the control of the wire 222a which is gradually un-reeled from the BU winch 222. Installation of the backbone cable 101 is continued - with the branch unit BU rolling on the BU wagon 250 - until the branch unit approaches the primary cable clamp 242 and the primary cable chute 244.

The broken-line illustration of the linear cable engine 230 in Fig. 6E indicates that the cable engine is not in action.

Fig. 6F: The installation of the backbone cable 101 is temporarily stopped and the primary cable clamp 242 is locked. The BU winch 222 is operated to reduce tension on the BU wire 222a and the wire is released from the branch unit BU. The primary cable 111 is returned to the linear cable engine 230 and installed therein, as illustrated by arrow 291. After installation of the primary cable 111 the primary cable clamp is opened again. The branch unit is released from the BU wagon and the wagon may be removed for subsequent use with the next BU reel.

Fig. 7A: The linear cable engine continues installation of the primary cable 111 and, thereby, the backbone cable net 101. The branch unit is guided over the primary cable chute 244 and the dead-end cable DE is placed in the dead-end chute 243.

In order to place the dead-end cable DE in its chute, some additional length of the DE cable may be required. The additional length can be obtained since the DE reel can be operated independently from the BU reel. For example, rotation of the reel body 210 may be temporarily stopped and the DE reel can be rotated for a short period by the flange drive 215.

Fig. 7B: The deployment of the backbone cable net 101 continues until the branch unit BU is landed on the seabed. Optionally, before or after the branch unit BU is landed any twisting of the primary cable 111 and the secondary cable DE-R may be released, e.g. by rotation of the vessel in combination with a remote controlled under water vehicle.

Fig. 7C: The deployment continues until the secondary cable has been unreeled and the DE termination 112 appears in the DE reel. The installation is stopped and the dead-end clamp 241 is locked. The wire 221a from the DE winch 221 is attached to the DE termination 112 and the DE termination 112 is released from the DE reel.

The dead-end clamp 241 is opened again and the DE winch 221 is operated until the DE termination 112 reaches the seabed. The wire 221a is released from the DE termination 112, e.g. via a remote control hook or a remote controlled underwater vehicle.

It is characteristic that the termination-end 112 is located underneath the coil of the secondary cable DE. For example the termination-end 112 may be fixed to the flange of the secondary reel DE-R at some position underneath the coil so that it is protected from external influences. Due to the location of the termination-end 112, the termination-end is released from the secondary reel DE-R when then secondary cable has been unreeled.

Fig. 7D: Deployment of the primary cable continues until the first BU reel BU-Ra is emptied and the primary cable 111 crosses from the first BU-reel (BU-Ra) to the next BU-reel (BU-Rb) over the next dead-end reel DE-Rb. Two cable crossings 260 may used for guiding the primary cable 111 over the DE reel as illustrated.

Then the installation proceeds from the BU clamp 211 for un-reeling the second BU reel (BU-Rb) and the second dead-end reel DE-Rb, similar to the installation step in Fig. 6B and the following steps in Figs. 3B-4D until the last DE termination 112 has been laid down on the seabed.

The separation of the dead-end chute 243 and the main chute 244 establishes an arm 490 of the DE cable extending from the branch unit BU as illustrated in Fig. 7A. The arm 490 helps to avoid twisting of the primary cable 111 and the secondary cable DE since the arm will generate a counter torque on the cables 111 if the primary cable starts twisting. The effect of the arm 490 can be increased by increasing the distance between the dead-end chute 243 and the main chute 244. The distance between the chutes may be 1 m, 10 m or more depending on the vessel's deck layout.

The application of independently rotatable secondary reels DE-R is advantageous since it enables independent unreeling of the secondary cable DE relative the primary cable 111. For example, if an additional length of the DE cable relative to the length of the primary cable is required this can be obtained by rotating the DE reel at a greater speed than the BU reel or by rotating the DE reel while the BU reel is stationary. If the DE cable is too long compared to the primary cable, the additional length of the DE cable can be eliminated by rotating the DE reel slower than the BU reel, rotating the DE reel in a direction opposite to the BU reel, or by temporarily stopping rotation of the DE reel.

During deployment of the backbone 101, situations may arise where sections of the secondary cable DE and the primary cable 110 need to the reeled back onto the respective DE and BU reels, for example if the cables twist. In this case it is also required to re-reel the primary and secondary cables onto the respective DE and BU reels at different speeds in order to ensure that remaining un-reeled DE cable has the correct length when the branch unit BU approaches the BU reel, i.e. to obtain the situation shown in Fig. 6A.

The multi-reel system 201 shown in Fig. 2 comprises several devices such as the branch and BU clamps 211, cable guides 260, cable clamps 241,242, chutes 243,244 and other components which may be sold independently from the main apparatus. The main apparatus comprises at least one primary reel BU-R, at least one secondary reel DE-R and a reel body for holding the reels. The main apparatus may additionally comprise the reel driving means 215 for driving the secondary reel, although the reel driving means may also be sold independently from the main apparatus.

In general, the primary reel BU-R is rotated or driven by rotation or operation of the reel body 210, for example by means of an auxiliary reel body driving means 299. The secondary reel DE-R is rotated or driven by driving or operation of the reel driving means 215.

Accordingly, the system 201 comprises the main apparatus and one or more of the devices such as the branch and BU clamps 211, cable guides 260, cable clamps 241,242, chutes 243,244 and other components which are used for deployment and retrieval of the cable distribution network. Although, the reel body driving means 299,699 may be a fixed installation on e.g. a vessel, the reel body driving means may be seen as a part of the system 201.

It is understood that the main apparatus and the system 201 is suited both for reeling and unreeling and, in general, for transporting cable sections of a seabed cable distribution network 101 for deployment and retrieval operations. Additionally, the main apparatus is also suited for the initial process of coiling cables of the network 101 onto the reels. This process is typically performed on land.

Therefore, although the description of the operation of the multi-reel system 201 focuses on un-reeling operations for deployment of cable, the operations apply equally to reeling operations for retrieval as well as for coiling of cable. Reeling operations are merely performed in opposite order relative to the un-reeling operations.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. An apparatus for deploying or retrieving cable sections of a seabed cable distribution network (101) comprising a primary cable section (111) and a secondary cable section (DE) branched off the primary cable, the apparatus comprises,
- a primary reel (BU-R) for accommodating at least a fraction of the primary cable section,
- a secondary reel (DE-R) arranged adjacent to the primary reel for accommodating at least a fraction of the secondary cable section, and **characterized by**
- a reel body (210) arranged for holding the primary and secondary reels and for rotating the primary reel (BU-R),
- a reel driving means (215) for driving the secondary reel (DE-R) independently of the primary reel.

2. An apparatus according to claim 1, where the primary reel is fixed to the reel body and where the secondary reel is rotatably connected to the reel body.

3. An apparatus according to claim 1, where the reel driving means is configured for driving the secondary reel (DE-R) simultaneously, but independently, with rotation of the primary reel (BU-R).

4. An apparatus according to claim 1, where the reel driving means (215) is moveably arranged for operatively connecting to different secondary reels.

5. An apparatus according to claim 1, where the reel driving means (215) is a flange drive operatively connectable to a flange of the secondary reel.

6. An apparatus according to claim 1, comprising a cable guide (260) with a curved guiding section configured to be coupled to a flange circumference (411) of the primary reel for guiding the cable across the flange circumference.

7. An apparatus according to claim 1, comprising a detachable branch unit clamp (211) for holding a branch unit (BU) which connects the primary cable section (111) with the secondary cable section (DE), and for clamping rotation of the primary reel (BU-R) relative to the adjacent secondary reel (DE-R), where the branch unit clamp is detachably connectable to flanges of the primary reel (BU-R) and the secondary reel (DE-R).

8. A system for deploying or retrieving cable sections of a seabed cable distribution network comprising a primary cable section and a secondary cable section branched off the primary cable, the system comprises:
- an apparatus according to claim 1.
- a reel body driving means (299,699) operatively connectable to the reel body (210).

9. A system according to claim 8, comprising first and second chutes (244, 243) for guiding the respective primary cable (111) and the secondary cable (DE) towards/from the seabed.

10. A system according to claim 8, comprising first and second cable clamps (241, 242) for clamping the respective primary cable (111) and the secondary cable (DE), where the cable clamps are located downstream relative to the primary reel (BU-R) and the secondary reel (DE-R).

11. A method for deploying or retrieving cable sections of a seabed cable distribution network comprising a primary cable section and a secondary cable section branched off the primary cable section, the method comprises,
- rotating a reel body for driving a primary reel (BU-R) mounted on the reel body, where the primary reel (BU-R) is arranged for accommodating at least a fraction of the primary cable section,
**characterized by**
- operating a reel driving means (215) operatively connected to a secondary reel (DE-R), where the secondary reel is rotatably connected on the reel body for enabling independent driving of the secondary reel relative to the primary reel, and where the secondary reel is arranged for accommodating at least a fraction of the secondary cable section.

12. A method according to claim 11, where a reel body driving means is used for rotating the reel body.

13. A method according to claim 11, comprising temporarily deploying or retrieving the primary cable section via the primary reel (BU-R) simultaneous with deploying or retrieving the secondary cable section via the secondary reel (BU-R).

14. A method according to claim 11, wherein prior to deploying the primary cable section and the secondary cable section a detachable branch unit clamp (211) is released from the primary reel and the secondary reel for allowing relative rotation of the primary reel and the adjacent secondary reel.

15. A method according to claim 14, further comprising releasing the branch unit (BU) from the detachable branch unit clamp (211), the branch unit connecting the primary cable section (111) with the secondary cable section (DE).

16. A method according to claim 11, wherein the primary cable section (111) is guided from a first primary reel (BU-R) across a secondary reel (DE-R) to a second primary reel for unreeling the second primary reel and the secondary reel.

## Patentansprüche

1. Vorrichtungen zum Abgeben oder Einholen von Kabelabschnitten eines Kabelverteilnetzes (101) auf dem Meeresboden, umfassend einen primären Kabelabschnitt (111) und einen von dem primären Kabel abzweigenden sekundären Kabelabschnitt (DE), wobei die Vorrichtung umfasst
- eine primäre Trommel (BU-R) zur Aufnahme mindestens eines Teils des primären Kabelabschnitts,
- eine benachbart zur primären Trommel angeordnete sekundäre Trommel (DE-R) zur Aufnahme mindestens eines Teils des sekundären Kabelabschnitts, und **gekennzeichnet durch**
- einen Trommelkörper (210), der dazu beschaffen ist, die primäre und die sekundäre Trommel zu halten und die primäre Trommel (BU-R) zu drehen,
- ein Trommelantriebsmittel (215) zum Antreiben der sekundären Trommel (DER) unabhängig von der primären Trommel.

2. Vorrichtung nach Anspruch 1, wobei die primäre Trommel an dem Trommelkörper befestigt ist und wobei die sekundäre Trommel drehbar mit dem Trommelkörper verbunden ist.

3. Vorrichtung nach Anspruch 1, wobei das Trommelantriebsmittel für den Antrieb der sekundären Trommel (DE-R) konfiguriert ist, der gleichzeitig mit, aber unabhängig von der Drehung der primären Trommel (BU-R) erfolgt.

4. Vorrichtung nach Anspruch 1, wobei das Trommelantriebsmittel (215) für die operative Verbindung zu verschiedenen sekundären Trommeln beweglich angeordnet ist.

5. Vorrichtung nach Anspruch 1, wobei das Trommelantriebsmittel (215) ein Flanschantrieb ist, der operativ mit einem Flansch der sekundären Trommel verbindbar ist.

6. Vorrichtung nach Anspruch 1, umfassend eine Kabelführung (260) mit einem gekrümmten Führungsabschnitt, der dazu konfiguriert ist, an den Flanschumfang (411) der primären Trommel gekoppelt werden, um das Kabel über den Flanschumfang zu führen.

7. Vorrichtung nach Anspruch 1, umfassend einen lösbaren Verzweigungseinheitshalter (211) zum Halten einer Verzweigungseinheit (BU), die den primären Kabelabschnitt (111) mit dem sekundären Kabelabschnitt (DE) verbindet, und zum Blockieren der Drehung der primären Trommel (BU-R) in Bezug auf die benachbarte sekundäre Trommel (DE-R), wobei der Verzweigungseinheitshalter lösbar mit dem Flansch der primären Trommel (BU-R) und der sekundären Trommel (DE-R) verbindbar ist.

8. System zum Abgeben oder Einholen von Kabelabschnitten eines Kabelverteilnetzes (101) auf dem Meeresboden, umfassend einen primären Kabelabschnitt (111) und einen von dem primären Kabel abzweigenden sekundären Kabelabschnitt (DE), wobei das System umfasst
- eine Vorrichtung nach Anspruch 1,
- ein Trommelkörperantriebsmittel (299, 699), das operativ mit dem Trommelkörper (210) verbindbar ist.

9. System nach Anspruch 8, umfassend ein erstes und ein zweites Leitblech (244, 243) zum Führen des primären Kabels (111) bzw. des sekundären Kabels (DE) zum/vom Meeresboden.

10. System nach Anspruch 8, umfassend einen ersten und einen zweiten Kabelhalter (241, 242) zum Blockieren des primären Kabels (111) bzw. des sekundären Kabels (DE), wobei die Kabelhalter in Bezug auf die primäre Trommel (BU-R) und die sekundäre Trommel (DE-R) nachgeordnet angeordnet sind.

11. Verfahren zum Abgeben oder Einholen von Kabelabschnitten eines Kabelverteilnetzes (101) auf dem Meeresboden, umfassend einen primären Kabelabschnitt (111) und einen von dem primären Kabelabschnitt abzweigenden sekundären Kabelabschnitt (DE), wobei das Verfahren umfasst
- Drehen eines Trommelkörpers zum Antrieb einer auf dem Trommelkörper montierten primären Trommel (BU-R), wobei die primäre Trommel (BU-R) zur Aufnahme mindestens eines Teils des primären Kabelabschnitts angeordnet ist, **gekennzeichnet durch**
- Betreiben eines Trommelantriebsmittels (215), das operativ mit einer sekundären Trommel (DE-R) verbunden ist, wobei die sekundäre Trommel drehbar auf dem Trommelkörper verbunden ist, um einen unabhängigen Antrieb der sekundären Trommel in Bezug auf die primäre Trommel zu ermöglichen, und wobei die sekundäre Trommel zur Aufnahme mindestens eines Teils des sekundären Kabelabschnitts angeordnet ist.

12. Verfahren nach Anspruch 11, wobei ein Trommelkörperantriebsmittel zum Drehen des Trommelkörpers verwendet wird.

13. Verfahren nach Anspruch 11, umfassend das kurzfristige Abgeben oder Einholen des primären Kabelabschnitts über die primäre Trommel (BU-R) bei gleichzeitigem Abgeben oder Einholen des sekundären Kabelabschnitts über die sekundäre Trommel (DE-R).

14. Verfahren nach Anspruch 11, wobei vor dem Abgeben des primären Kabelabschnitts und des sekundären Kabelabschnitts ein lösbarer Verzweigungseinheitshalter (211) von der primären Trommel und der sekundären Trommel gelöst wird, um eine relative Drehung der primären Trommel und der benachbarten sekundären Trommel zu ermöglichen.

15. Verfahren nach Anspruch 14, weiterhin umfassend das Freigeben der Verzweigungseinheit (BU) von dem lösbaren Verzweigungseinheitshalter (211), wobei die Verzweigungseinheit den primären Kabelabschnitt (111) mit dem sekundären Kabelabschnitt (DE) verbindet.

16. Verfahren nach Anspruch 11, wobei der primäre Kabelabschnitt (111) von einer ersten primären Trommel (BU-R) über eine sekundäre Trommel (DE-R) zu einer zweiten primären Trommel geführt wird, um die zweite primäre Trommel und die sekundäre Trommel abzuwickeln.

## Revendications

1. Appareil de déploiement ou de récupération de tronçons de câble d'un réseau sous-marin de distribution par câble (101) comprenant un tronçon de câble primaire (111) et un tronçon de câble secondaire (DE) constituant une ramification du câble primaire, l'appareil comprenant :
- une bobine primaire (BU-R) destinée à recevoir au moins une partie du tronçon de câble primaire,
- une bobine secondaire (DE-R) adjacente à la bobine primaire destinée à recevoir au moins une partie du tronçon de câble secondaire, et **caractérisé par**
- un corps de bobine (210) disposé pour maintenir les bobines primaire et secondaire et pour mettre en rotation la bobine primaire (BU-R),
- un moyen d'entraînement de bobine (215) destiné à entraîner la bobine secondaire (DE-R) indépendamment de la bobine primaire.

2. Appareil selon la revendication 1, où la bobine primaire est fixée sur le corps de bobine et la bobine secondaire est reliée de manière rotative au corps de bobine.

3. Appareil selon la revendication 1, où le moyen d'entraînement de bobine est configuré pour entraîner la bobine secondaire (DE-R) en même temps que, mais indépendamment de, la rotation de la bobine primaire (BU-R).

4. Appareil selon la revendication 1, où le moyen d'entraînement de bobine (215) est disposé de manière mobile pour être relié de manière opérationnelle à différentes bobines secondaires.

5. Appareil selon la revendication 1, où le moyen d'entraînement de bobine (215) est un entraînement de bride pouvant être relié de manière opérationnelle à une bride de la bobine secondaire.

6. Appareil selon la revendication 1, comprenant un guide-câble (260) possédant un tronçon de guidage courbe configuré pour être accouplé à une circonférence de bride (411) de la bobine primaire afin de guider le câble en travers de la circonférence de bride.

7. Appareil selon la revendication 1, comprenant un étrier d'unité de ramification (211) destiné à maintenir une unité de ramification (BU) qui relie le tronçon de câble primaire (111) au tronçon de câble secondaire (DE), et à bloquer la rotation de la bobine primaire (BU-R) par rapport à la bobine secondaire (DE-R) adjacente, où l'étrier d'unité de ramification peut être relié de manière amovible à des brides de la bobine primaire (BU-R) et de la bobine secondaire (DE-R).

8. Système de déploiement ou de récupération de tronçons de câble d'un réseau sous-marin de distribution par câble comprenant un tronçon de câble primaire et un tronçon de câble secondaire constituant une ramification du câble primaire, le système comprenant :
- un appareil selon la revendication 1,
- un moyen d'entraînement de corps de bobine (299, 699) pouvant être relié de manière opérationnelle au corps de bobine (210).

9. Système selon la revendication 8, comprenant une première et une deuxième goulotte (244, 243) destinées à guider respectivement le câble primaire (111) et le câble secondaire (DE) vers/depuis le fond marin.

10. Système selon la revendication 8, comprenant un premier et un deuxième collier de serrage de câble (241, 242) destinés à serrer respectivement le câble primaire (111) et le câble secondaire (DE), où les colliers de serrage de câble sont situés en aval de la bobine primaire (BU-R) et de la bobine secondaire (DE-R).

11. Méthode de déploiement ou de récupération de tronçons de câble d'un réseau sous-marin de distribution par câble comprenant un tronçon de câble primaire et un tronçon de câble secondaire constituant une ramification du tronçon de câble primaire, la méthode comprenant :
- la mise en rotation d'un corps de bobine pour entraîner une bobine primaire (BU-R) montée sur le corps de bobine, où la bobine primaire (BU-R) est disposée pour recevoir au moins une partie du tronçon de câble primaire,
**caractérisée par**
- l'actionnement d'un moyen d'entraînement de bobine (215) relié de manière opérationnelle à une bobine secondaire (DE-R), où la bobine secondaire est reliée de manière rotative au corps de bobine pour permettre un entraînement indépendant de la bobine secondaire par rapport à la bobine primaire, et où la bobine secondaire est disposée pour recevoir au moins une partie du tronçon de câble secondaire.

12. Méthode selon la revendication 11, où un moyen d'entraînement de corps de bobine est utilisé pour mettre en rotation le corps de bobine.

13. Méthode selon la revendication 11, comprenant le déploiement ou la récupération temporaires du tronçon de câble primaire via la bobine primaire (BU-R) en même temps que le déploiement ou la récupération du tronçon de câble secondaire via la bobine secondaire (BU-R).

14. Méthode selon la revendication 11, où avant le déploiement du tronçon de câble primaire et du tronçon de câble secondaire, un étrier d'unité de ramification (211) amovible est dégagé de la bobine primaire et de la bobine secondaire pour permettre la rotation relative de la bobine primaire et de la bobine secondaire adjacente.

15. Méthode selon la revendication 14, comprenant en outre le dégagement de l'unité de ramification (BU) de l'étrier d'unité de ramification (211) amovible, l'unité de ramification reliant le tronçon de câble primaire (111) au tronçon de câble secondaire (DE).

16. Méthode selon la revendication 11, où le tronçon de câble primaire (111) est guidé depuis une première bobine primaire (BU-R) en travers d'une bobine secondaire (DE-R) vers une deuxième bobine primaire pour dérouler la deuxième bobine primaire et la bobine secondaire.
